# EUROPEAN PATENT APPLICATION

(11) **EP 3 287 198 A1**
(43) Date of publication of application: **28.02.2018**
(21) Application number: 16185523.4
(22) Date of filing: 24.08.2016
(51) Int. Cl.: B08B 1/00, A47L 11/38, B08B 1/04, F24J 2/46, H02S 40/10, A01G 9/14

(54) **ROOF WASHER FOR GLASSHOUSES**

(71) Applicant: Stedehouder Beheer BV, 1704 SJ Heerhugowaard (NL)
(72) Inventor: STEDEHOUDER, Hans Olaf, 1704 SJ Heerhugowaard (NL)
(74) Representative: De Vries & Metman

(57) **Abstract**

Roof washer (1) for glasshouses. The roof washer comprises a main body and side frames extending from the main body, usually two side frames (3A, 3B) in a reverse V-shape. The side frames are each provided with a brush roller (6) suspended from the side frame. Wheels (7A, 7B) support the side frames. The roof washer comprises separate drives for the wheels and for the brush rollers respectively. The drive (12) for the wheels may for example be an electric motor (13) while the drive (13) for the brush rollers (6) may for example be a hydraulic drive.

## Description

The invention relates to a roof washer for cleaning roofs of glasshouses. Such roof washers usually comprise:
- a carriage with two side frames extending symmetrically at opposite sides of a central section, the side frames being inclined to define an inverted V-shape in front view;
- both side frames being provided with a brush roller suspended from the respective side frames;
- water dispensers for dispensing water in the area of the brush rollers;
- wheels supporting the side frames;
- at least one reel supported by one of the side frames for winding a water supply hose for suppling water to the water dispensers of the brush rollers;
- a drive for driving the wheels and the brush rollers.

Glasshouses typically have a plurality of parallel gable roofs with gutters between them. The wheels of the roof washer are spaced and dimensioned to roll via the gutters. The suspension of the brush rollers is configured such that the brush rollers roll over respective roof surfaces, when the roof washer is moved along the gutters.

Optionally, the roof washer will also comprise a reel for winding a power supply cable, although the power supply can also be provided by alternative sources, such as a battery and/or solar cells.

The roof washer is positioned with its wheels in two adjacent gutters, with the inverted V-shape of its frame following the gable shape of the roof. The brush rollers rest on the inclined roof surfaces. When the roof washer is activated it drives from one end of the gutters to the opposite end in a forward stroke, and returns via the same gutters with a return stroke. The reels for the water supply hose and the power cable are unwound during the forward stroke and rewound during the return stroke.

Some systems comprise a sideways transporter with a movable platform for receiving the roof washer at the end of the return stroke and transporting it in a sideways direction to a next pair of gutters to clean a next gable roof.

In present day systems, the drive comprises a single hydraulic drive in the main body centrally driving the wheels as well as the brush rollers and the reels. Since the wheels and the brush rollers are serially driven by the same hydraulic system, the driving of the rollers affects the driving of the wheels. For example, the speed of the roof washer wheels may become irregular, if the brush rollers or the wheels experience increased resistance. As a result, the water supply line is irregularly wound on the reel. Moreover, the maximum speed of the roof washer is relatively low.

It is an object of the invention to provide a roof washer which is less susceptible for interference and which has a more even, and preferably higher speed.

The object of the invention is achieved with a roof washer which comprises separate drives for the wheels and for the brush rollers respectively.

The drive for the wheels may for example comprise an electric motor. This makes it possible to drive the roof washer with higher speeds, e.g., up to about 35 m/min. Suitable electric motors include, for example, AC motors, in particular synchronous or asynchronous three-phase motors. A frequency controller can be used to control the electric motor's drive speed. The electric motor may for example be provided with an active brake mechanism, such as an electric brake.

In a specific embodiment the drive for the brush rollers may comprise a hydraulic pump with a hydraulic manifold and hydraulic motors actuating the brush rollers. The reels may be driven by the same hydraulic drive. The hydraulic pump may for example be a gear pump. Particularly suitable hydraulic motors include for example orbital motors. The manifold may for example be provided with a pressure limitation control, e.g., which may for instance be set to a pressure of about 180 bar.

The roof washer will usually comprise a control unit, e.g., for controlling the wheel drive and the drive for the brush rollers. The control unit may be automatic or semi-automatic and/or it may be operator controlled. To this end it may comprise a user interface for manual control, e.g., on an operator platform allowing an operator to drive with the roof washer carriage during operation.

The side frames may for example be tubular frames of any suitable material, such as an aluminum alloy.
Optionally, the roof washer may comprise additional tools, such as gutter cleaners, vent window brushes, brush fenders for the brush rollers, sensors for detecting opened and the like.

The roof washer can be used for any type of glasshouse, including greenhouses for agricultural use or protective glasshouses, e.g., for solar energy systems, such as glasshouses for housing solar concentrators as for example disclosed in WO 2012/006255, typically used in desert-like environments for generating steam for oil recovery industry.

Water is typically used to wash the glass roof decks. Optionally, the water may contain cleaning agents or other types of functional agents.

Due to the higher maximum speed of the present roof washer, the roof washer is also particularly useful for applying a coating on the roof decks of agricultural greenhouses, such as whitewash or other types of coatings. Such whitewash is applied to reduce the temperature inside the glasshouse during summer. By releasing or retracting the brushers and by feeding the spray booms with a suitable aqueous whitewash suspension, the roof washer can be used to apply the whitewash in a layer of more uniform thickness in a relatively fast and efficient way.

The invention will be further explained with reference to the drawings showing an exemplary embodiment.
- Figure 1:: shows an exemplary embodiment of a roof washer in perspective view;
- Figure 2:: shows the drive components of the roof washer in Figure 1;
- Figure 3:: shows a schematic diagram of the hydraulic drive system of the roof washer of Figure 1.

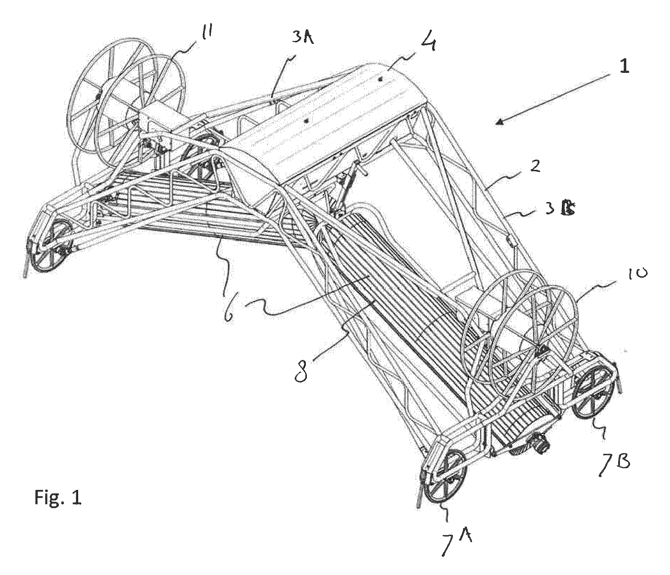

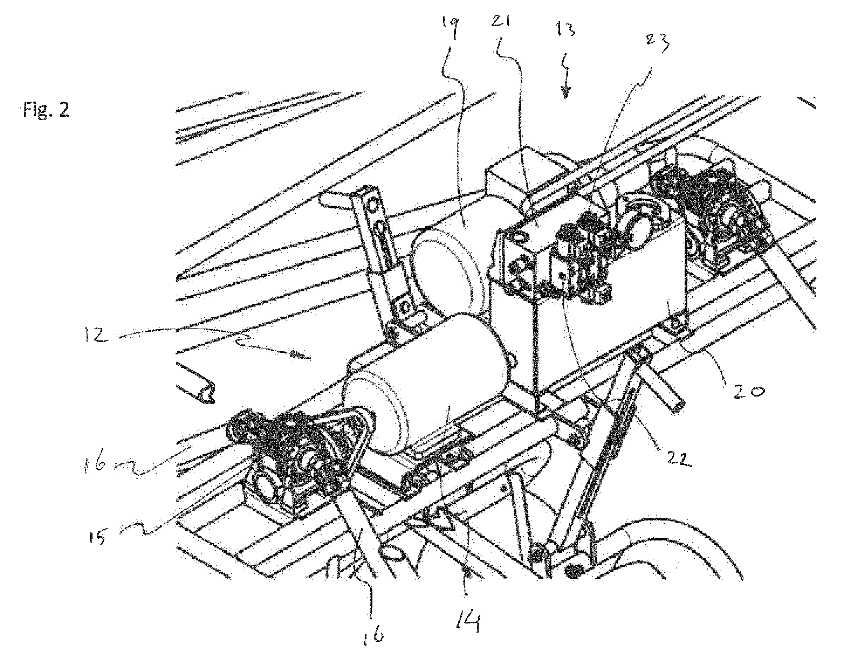

Figure 1 shows an exemplary embodiment of a roof washer 1. The roof washer comprises a carriage or main body 2 with two side frames 3A, 3B extending symmetrically at opposite sides of a central section 4. The central section 4 comprises a closed casing including the drives, as will be explained hereafter with reference to Figure 2.

The side frames 3A, 3B are inclined and form an inverted V-shape in front view. Both side frames 3A, 3B are provided with a brush roller 6 suspended from the respective side frames 3A, 3B. The two side frames 3A, 3B are both supported by a pair of wheels 7A, 7B. The wheels 7A, 7B are dimensioned to be received in gutters of a glasshouse. The suspension of the brush rollers 6 is such that the rollers 6 brush over the gable roof surfaces of the glasshouse, when the wheels 7A, 7B are positioned in a gutter. These dimensions vary per type of glasshouse.

The two side frames 3A, 3B comprise water dispensing tubes 8 extending alongside the respective brush roller 6. These water dispensing tubes 8 comprise a range of downwardly directed spraying nozzles (not shown).

Both side frames 3A, 3B are provided with a reel 10, 11. One reel 10 is used for winding a water supply hose, while the other reel 11 is used for winding a power cable. A hose line (not shown) connects the wound water supply hose on the reel 10 to a splitter (not shown) in the central section 4. Two further hose lines (not shown) distribute the water from the splitter to the water dispensing tube 8.

Figure 2 shows the interior of the central section 4 including a drive 12 for the wheels and a hydraulic drive system 13 for driving the brush rollers 6 and the reels 10, 11.

In the shown embodiment the wheel drive 12 is a four-wheel drive. Two-wheel drives can also be used, if so desired. The drive 12 includes a 400 V three-phase electric motor 14 driving the four wheels via a gear boxes 15A, 15B and cardan shafts 16. Gear boxes 15A, 15B are connected via a drive shaft (not shown). Other types of electric motors can also be used, if so desired.

The hydraulic drive 13 for driving the brush rollers 6 and the two reels 10, 11 comprises a pump 19 with a pump motor 18, an oil reservoir 20, a manifold 21, high and low pressure lines 22, 23, hydraulic motors 24 actuating the brush rollers 6 and hydraulic motors 25 actuating the reels 10, 11.

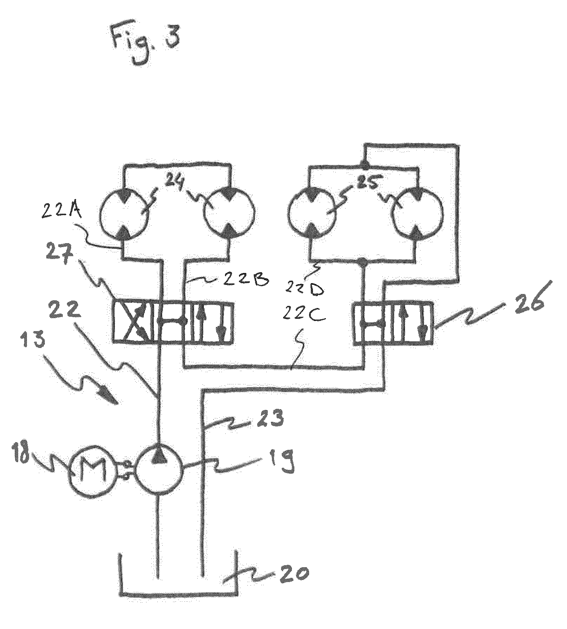

Figure 3 shows a schematic diagram of the hydraulic arrangement. A high pressure line 22 leads from the hydraulic pump 19 to a three-way valve 27, selectively connecting the high pressure line 22 to either pressure line 22A or pressure line 22B. In a first position the three-way valve 27 connects to the pressure line 22A to the two serially arranged hydraulic motors 24 and subsequently back via pressure line 22B to the three-way valve 27. In a second position the three-way valve 27 connects to the pressure line 22B to the two serially arranged hydraulic motors 24 and subsequently back via pressure line 22A to the three-way valve 27. This way, the rotational direction of the brush rollers can be reversed.

Subsequently, the three-way valve 27 is connected to a two-way valve 26 via a pressure line 22C. A high pressure line 22D leads from the valve 26 to the parallel arrangement of the hydraulic motors 25 of the respective reels 10, 11. A low pressure line 23 returns the oil from the two-way valve 26 to the oil reservoir 20.

## Claims

1. Roof washer (1) for glasshouses, the roof washer comprising:
- a main body (2);
- one or more side frames (3A, 3B) extending from the main body;
- the one or more side frames being provided with a brush roller (6) suspended from the side frame;
- wheels (7A, 7B) supporting the one or more side frames; wherein the roof washer comprises separate drives for the wheels and for the brush rollers respectively.

2. Roof washer according to claim 1, wherein the drive (12) for the wheels comprises an electric motor (14).

3. Roof washer according to claim 2, wherein the electric motor (14) is a three-phase motor combined with a frequency controller.

4. Roof washer according to any preceding claim, wherein the drive (13) for the brush rollers (6) comprises a hydraulic pump (19) with a hydraulic manifold (21) and hydraulic motors (24) actuating the brush rollers.

5. Roof washer according to claim 4, comprising a reel (10) for winding a power cable and/or a reel (11) for winding a water supply hose, the reels comprising a hydraulic motor driven by the same hydraulic pump as the brush rollers.

6. Roof washer according to any preceding claim, comprising two side frames (3A, 3B) extending at opposite sides of the main body (2), the side frames being inclined to define an inverted V-shape in front view, both side frames being provided with a brush roller suspended from the side frame and with wheels supporting the side frames.

7. Method for applying a coating, such as a layer of whitewash, on a greenhouse roof using a roof washer (1) according to any preceding claim.
